# EUROPEAN PATENT SPECIFICATION

(11) **EP 1 041 704 B1**
(45) Date of publication and mention of the grant of the patent: **01.02.2006**
(21) Application number: 00106629.9
(22) Date of filing: 28.03.2000
(51) Int. Cl.: H02K 33/16

(54) **Actuator with linear motor, particularly for devices of weaving machines**
Betätiger mit Linearmotor, insbesondere für Webmaschinen
Actionneur avec moteur linéaire, notamment pour métiers à tisser

(30) Priority: 29.03.1999 IT MI990646
(43) Date of publication of application: 04.10.2000
(73) Proprietor: Promatech S.p.A., 24020 Colzate (Bergamo) (IT)
(72) Inventor: Volpi, Corrado, 24127 Bergamo (IT); Piantoni, Matteo, 24021 Albino, Bergamo (IT)
(74) Representative: Faggioni, Marco

(56) References cited:
- GB-A- 853 388
- US-A- 5 701 039
- PATENT ABSTRACTS OF JAPAN vol. 005, no. 133 (E-071), 25 August 1981 (1981-08-25) -& JP 56 068260 A (SUMIDA SHIGERU), 8 June 1981 (1981-06-08)

## Description

The present invention concerns an actuator with linear motor and, in particular, an actuator of this type having a configuration such as to be easily miniaturized and be used to directly operate the different devices having a reciprocating motion, mounted on a weaving loom.

As known to the technicians of the field, in the construction of weaving machines it has become more and more frequent to adopt actuators, electronically controlled by a central processing unit, to operate the large number of devices with a reciprocating or intermittent motion mounted on such machines; this system replaces the previous mechanical technology providing for a single central motor which, through appropriate leverages, produced the movement of the single devices.

The above solution provides different evident advantages as far as simplifying the general structure of the machine but, above all, it far more easily allows to optimize the motion law of said devices, which are all characterized by limited strokes, low mechanical powers, reduced or even no slacks, high precision of movement in synchronism with the main motion of the loom. It is actually this last feature which, due to the increasingly high working speeds of looms, has nowadays become a critical point; in fact, the time gaps within which the devices have to operate are becoming shorter and shorter and it is hence necessary for the response times of such devices to be very short. This requires the inertia of the movable parts of said devices, and especially also that of the actuators operating the same, to be particularly low. The actuators also require to be suitably miniaturized, so as to make it possible to insert them close to the devices which they have to operate, without hampering the normal weaving operations.

The known-type actuators used at present for the above mentioned purposes can be classified in two categories, according to the type of motor - rotary or linear - adopted, each category having the advantages or drawbacks which shall be illustrated in further detail hereinafter.

The actuators with rotary motor - of the direct current, step-by-step, or brushless type - all provide the important advantages of being very compact in a radial direction, easy to connect with any mechanical system according to well-established commercial standards, and - what is most important in the weaving environments characterized by a high amount of dust - of being apt to work correctly even in hard environmental conditions, thanks to the fact that they can be easily sealed in correspondence of the rotary joint between the fixed and the rotating part.

On the other hand such motors are rarely apt to satisfactorily form a whole with the device which they have to operate, thus uselessly complicating the device - meant in itself to merely perform linear movements of scarce amplitude - and limiting its performances as far as promptness of response.

On the contrary, the actuators with linear motor - of the step-by-step or direct current type - though being easily apt to form a whole with the aforecited devices, without altering their reduced inertia, and providing excellent performances as far as promptness of response, still involve serious drawbacks from the mechanical point of view. In fact, to obtain a sufficiently compact structure of the actuator, at least in the moving plane of its slider, it has up-to-date been indispensable to adopt - for example in the knitwear field - linear motors whose movable part is slidable along linear guides. Examples of linear actuators according to the prior art are described in JP 56068260, for what concerns a cylindrical motor, and in US 5701039 for what concerns a flat motor. In both cases the slider are guided in their movement along linear guides. Nevertheless, the presence of such linear guides, normally of prismatic shape, forces - for obvious requirements of parallelism and linearity - to perform high-precision machinings, apt to make the production costs of the actuator very high, to an extent which becomes higher the greater the miniaturization of said actuator. Moreover the actuator with linear motor on linear guides is particularly delicate for what concerns the damages caused by dusts produced in the surrounding environment; special care should thus be taken in creating a seal for the linear connection between its movable part and its fixed part, to an increased extent according to the degree of accuracy of said connection, so as to preheat any possible access of foreign particles between the surfaces placed in mutual sliding contact. Since the degree of accuracy of said connections is normally very high - seen the pressing requirement to reduce to a minimum any possible slacks of the controlled device - the problem of creating an appropriate seal for said linear connection is not easy to solve and anyhow involves a further considerable rise in costs.

From the above description of prior art it thus appears evident that, at the present state of knowledge, all the known types of actuators have drawbacks such as to strongly limit their use for the operation of devices mounted on weaving machines and, in particular, on looms, which devices are characterized by: reciprocating movements of scarce amplitude and high frequency; a complicated motion law, including steps at a standstill and a strict observance of the operating times in synchronism with the main motion of the loom; low power absorption; highly reduced or even no slacks.

In fact, in the case of devices with rotary actuators, the overall inertia reduced to an axis is such as not to allow a satisfactory adjustment of the device to the aforecited reciprocating motion law beyond a set level of working frequency of the loom; while in the case of devices with linear actuators, the cost of the linear guides system and of the systems to protect the same from dust makes it impossible to industrially apply said type of actuator just beyond a slight degree of accuracy and miniaturization, thereby notably limiting its use.

Consequently, in the field of weaving machines there is a strongly felt requirement to dispose of an actuator having the requisites needed to allow its successful application to the control devices of a weaving machine of the above type, namely an actuator characterized by a low inertia and thus a high promptness of response, by low costs even at high levels of miniaturization, by not being affected by dusts, by a structure which is easy to miniaturize, by the absence of misalignments.

The object of the present invention is to thus supply an actuator of this type - starting from the field of actuators with linear motor, which are potentially apt to more easily and efficiently form a whole with any type of device having a reciprocating and intermittent motion - meant to eliminate the problems of construction and of tightness to dust connected to the presence of the linear prismatic guides typical of said actuators.

According to the present invention, said object is reached with an actuator having a flat linear motor which comprises a stator and a slider movable therein, characterized in that said slider forms the connecting rod of a flat four-bar linkage with two rocking levers, each of said rocking levers being hinged on one side to said stator and on the other side to said connecting rod-slider.

The linear motor used in the actuator according to the present invention can be indifferently of the impulse type, of the direct current type, of the induction type, or the like. Among these, the direct current linear motor is found preferable for its simpler construction and for the high power it can supply, which characteristics are helpful to construct a compact actuator, with a high working speed.

The fact of having conceived the slider of the linear motor of the present invention in the form of a connecting rod of a four-bar linkage with two rocking levers has allowed to entirely eliminate both the linear prismatic guides and any other type of reciprocal contact between the slider and the stator, entrusting the support and positioning of the slider merely to the rotary joints which characterize the couplings of the levers of said four-bar linkage. Since joints of this type, having a high degree of reliability and precision, are normally available on the market, it is possible to obtain a movement of the slider with the required and constant magnetic gap, as well as totally free from slacks.

Having thus removed all contact between the slider and the stator, it has been possible to eliminate one of the fundamental problems which has, up-to-date, been limiting the use of linear motors, namely that of tightness to dust, thereby fully reaching the object of the invention.

Further characteristics and advantages of the actuator with linear motor according to the present invention will anyhow be more evident from the following detailed description of some preferred embodiments thereof, illustrated by way of example on the accompanying drawings, in which:
Fig. 1 is a front elevation, with removed parts, of a first embodiment of the actuator with linear motor according to the present invention;
Fig. 2 is a perspective view of the actuator shown in fig. 1;
Fig. 3 is a front elevation of a second embodiment of the actuator with linear motor according to the present invention, used to operate a weft yarn presenting rod;
Fig. 4 is a side elevation of the actuator shown in fig. 3;
Figs. 5A, 5B and 5C are, respectively, a perspective view, a top view and a side view, diagrammatically illustrating an assembly formed by a plurality of actuators according to fig. 3, associated onto a single support to form a weft yarn presenting device;
Fig. 6A is a front elevation of a third embodiment of the actuator with linear motor according to the present invention, used to operate a device for the leno heald weave of warp yarns;
Fig. 6B is a perspective view of the opposite side of the actuator shown in fig. 6A;
Fig. 7 is a side elevation of a fourth embodiment of the actuator with linear motor according to the present invention, used to operate the opening and closing of a weft yarn carrying gripper at the centre of the loom shed;
Fig. 8 is a perspective view of a fifth embodiment of the actuator with linear motor according to the present invention, used to control the opening and closing of a weft yarn carrying gripper outside the loom shed; and
Fig. 9 is a side elevation of a sixth embodiment of the actuator with linear motor according to the present invention, used to operate a device to separate the weft yarns.

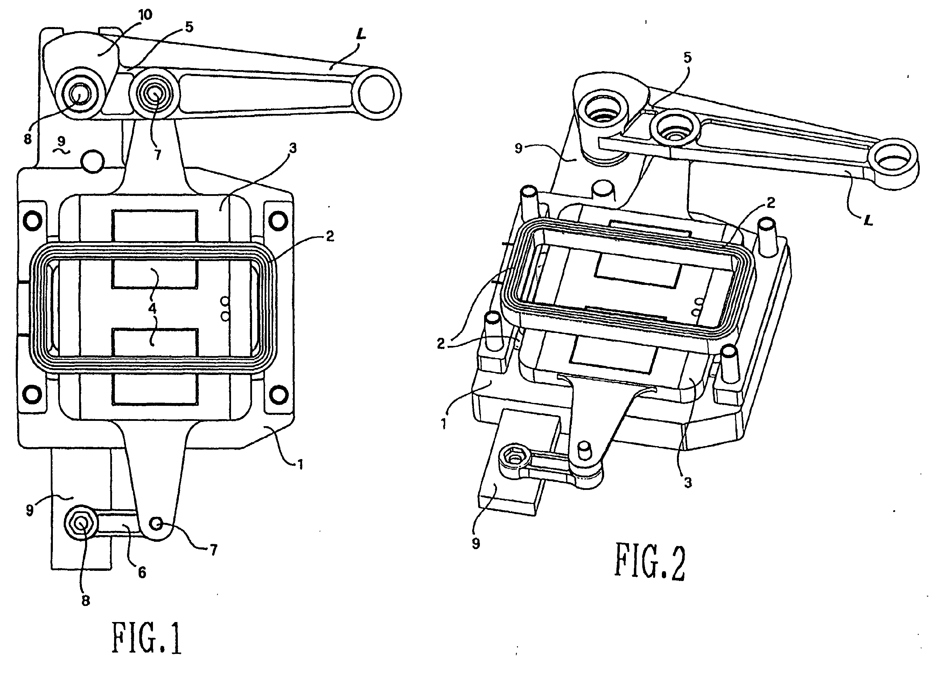

The essential structure of the actuator with linear motor according to the present invention is clearly shown in figs. 1 and 2. It comprises a stator formed by two facing plates 1, each of which incorporates at least one electric coil 2 to form the magnetic field for operating a slider 3. To show more clearly the inner part of the actuator, in figs. 1 and 2 the top plate 1 has been removed, while placing in evidence the coil 2 which is incorporated therein. The slider 3 consists of a flat plate, interposed with a suitable magnetic gap between the plates 1 of the stator and incorporating at least one pair of permanent magnets 4 having opposed polarities. The force applied by the slider 3 and the direction of said force can be regulated, in known manner, by adjusting the intensity and direction of the current circulating in the coil 2.

In its movements inside the stator, the slider 3 is kept in position by two rocking levers 5 and 6, each of which is hinged, in 7 onto a respective eyelet formed at the end of the slider 3, and in 8 onto the body of the stator or, more precisely, onto ears 9 projecting from either one of the two plates 1 forming the stator. Preferably, the two rocking levers 5 and 6 are parallel and the distance between the rotation centres 7 and 8 is identical for each rocking lever, so that the linkage formed by the rocking levers 5 and 6 and by the slider 3 forms a flat four-bar linkage, in which the slider 3 acts as a connecting rod. One of the two rocking levers - the one marked on the drawings by reference 5 - extends beyond the hingeing point 7 to form a control lever L.

Consequently, the slider 3 has only one degree of freedom, univocally determined, consisting of a linear movement of the hunting type, developing on the slider plane, namely on a plane parallel to the planes of the plates 1 of the stator. By choosing high-quality components - with no radial or axial slacks - to produce the hinges 7 and 8, it is hence possible to obtain a preset magnetic gap between the slider 3 and the plates 1 of the stator, and to keep said gap unaltered both in respect of the motion of the slider 3 and in respect of time, without requiring any other adjustment or bearing system for the slider and its motion.

To control the momentary position of the slider 3, use is made of any known type position sensor apt to send to the central processing unit a signal corresponding to the momentary position of the slider 3. For example, use can be made of a Hall effect sensor, positioned between one of the ears 9 and a tab 10 fixed to the rocking lever 5 in correspondence of its fulcrum, or of a rotary encoder directly operated by the rocking levers 5 or 6 or by a flexible cable directly connected to the slider 3, or also of other devices known to an expert of the field.

The basic embodiment of the actuator with linear motor according to the present invention - illustrated in figs. 1 and 2 - can be used as such to operate a great number of weaving devices, possibly by giving a particular shape to the control lever L so that it may be apt to directly operate a weaving device, or else by connecting one of the hinges 7 directly to the movable part of such devices.

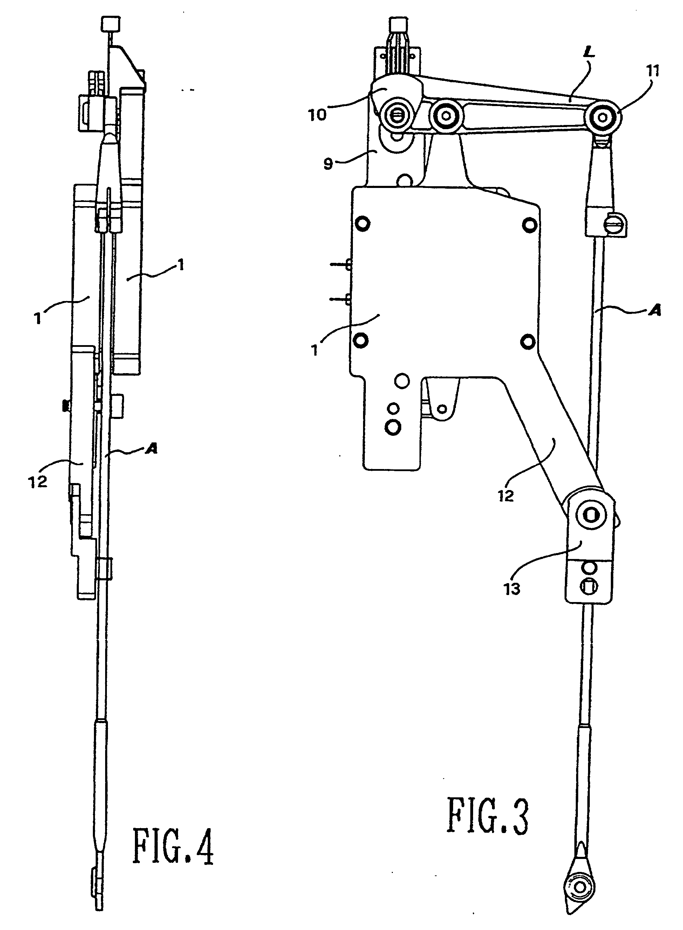

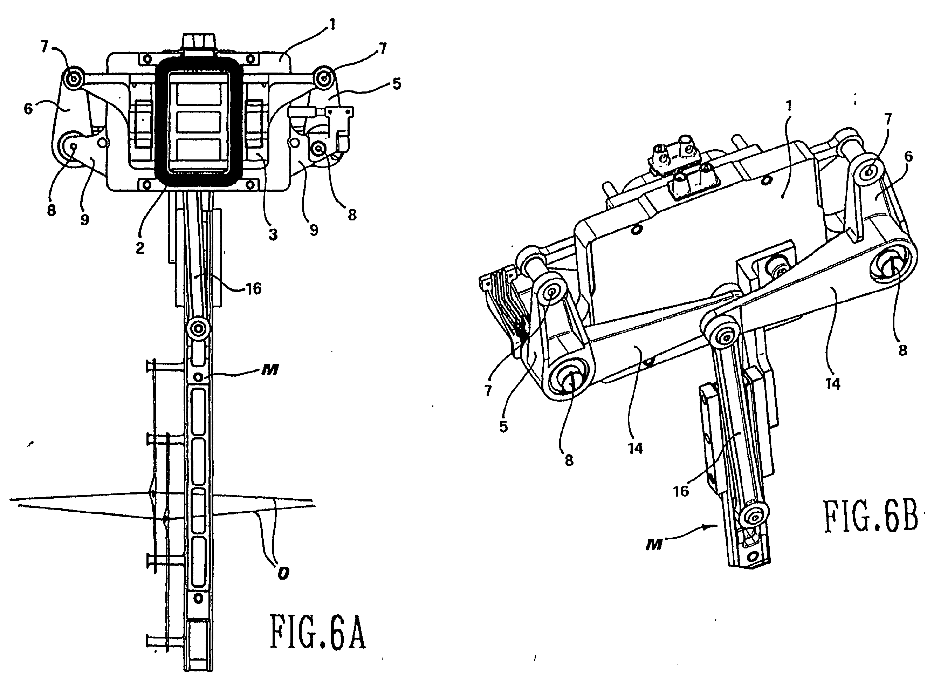

However, in those cases in which the operation of the weaving device should require more complicated movements, the actuator of the present invention can be provided with additional leverages apt to increase its performance, as in the embodiment illustrated in figs. 3 to 5 wherein the weaving device is a weft yarn presenting device, and in the embodiment illustrated in figs. 6 wherein the weaving device is a device for the leno heald weave of warp yarns. These embodiments shall be briefly described hereunder.

In the embodiment shown in figs. 3 to 5, the free end of the control lever L, formed in one piece with the rocking lever 5, is connected, through a hinge 11, to a weft yarn presenting rod A having a yarnguide eyelet at its end. The rod A is moreover connected to an extension 12 of one of the stator plates 1 by way of a rotatable sliding joint 13.

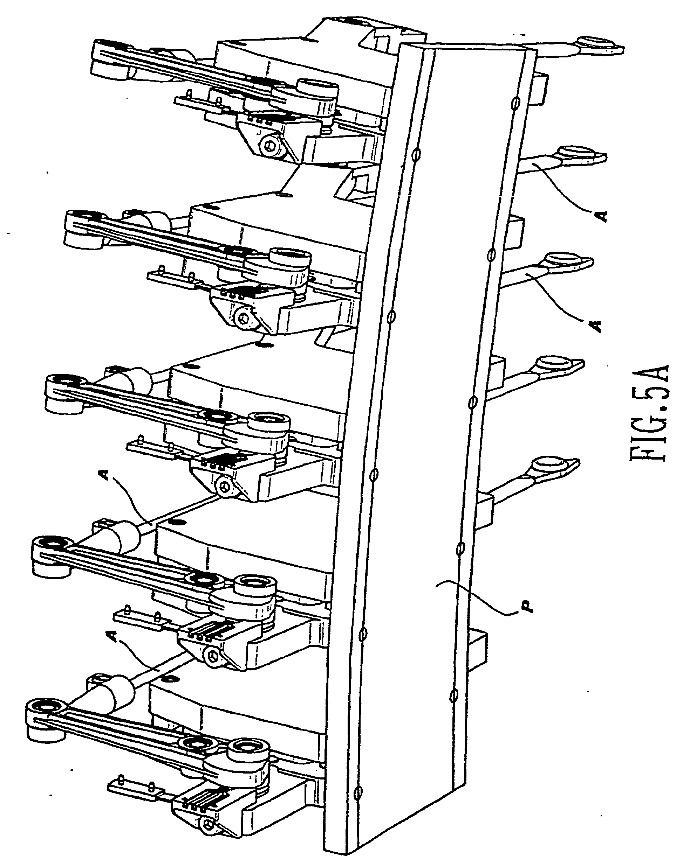

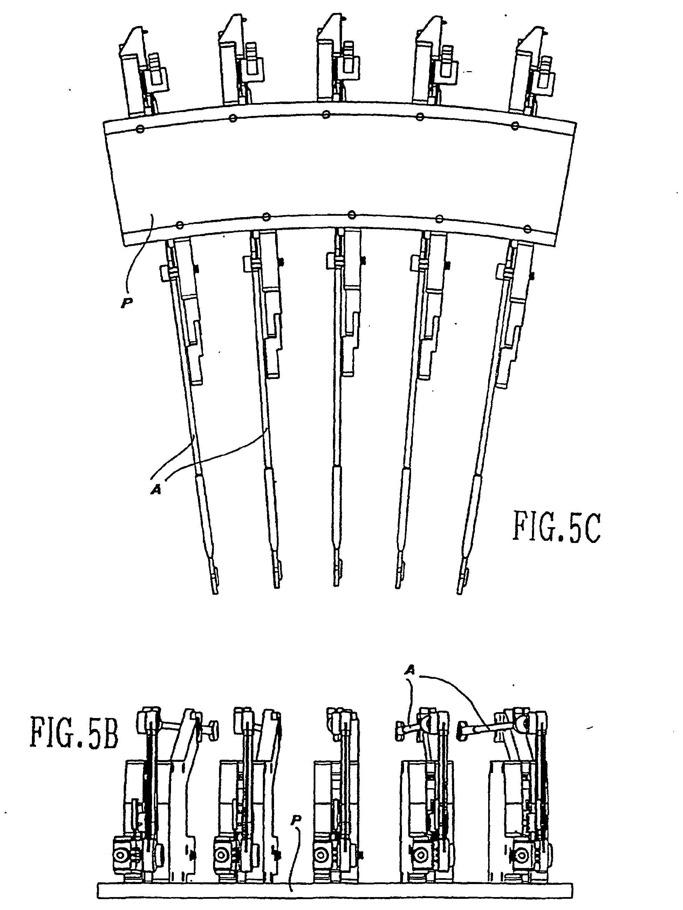

Actuators with linear motor according to this embodiment can be associated together, in a number sufficient to form a weft yarn presenting device, by being fixed to a support plate P, preferably following an arched path - as shown in figs. 5A and 5C - so that the ends of the rods A fall, with their yarnguide in working position, into a fairly limited area.

In the third embodiment of the actuator, shown in figs. 6, the ends with an eyelet of the slider 3 project sideways from said slider - and not from a central position, as in the previously described embodiments - and the rocking levers 5 and 6 comprise perpendicular extensions 14 apt to form therewith two toggle-joint levers. Such toggle-joint levers are respectively hinged, in 8, onto the two ears 9 projecting from the plates 1 of the stator and they control with their free end, by way of two connecting rods 16, two heald carrying slides forming part of a device M for the leno heald weave of warp yarns 0.

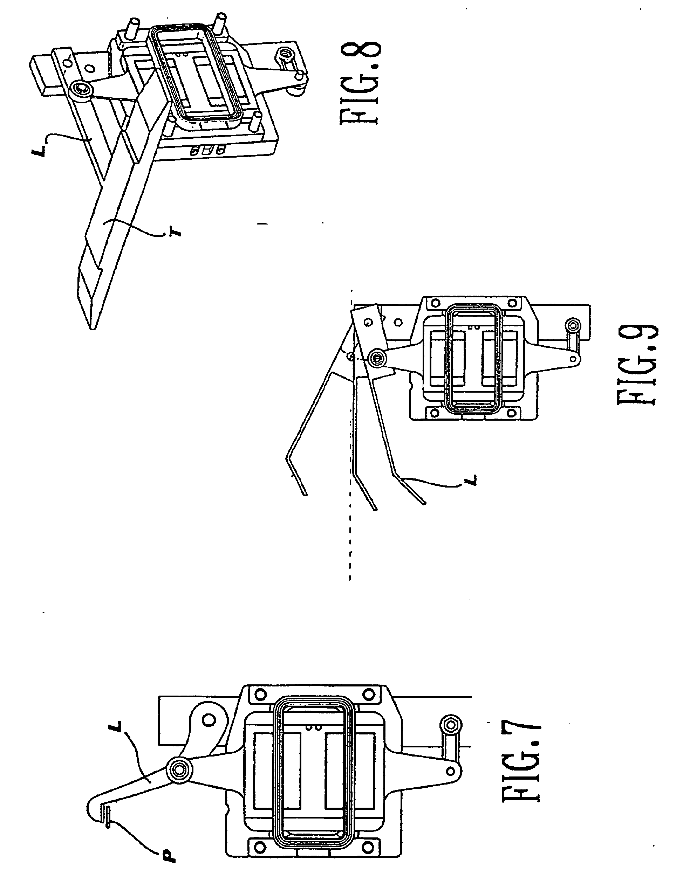

Figs. 7 to 9 finally illustrate further examples of use of the actuator according to the present invention. In fig. 7, the control lever L, formed in one piece with the rocking lever 5, is suitably shaped to directly operate the device P for opening and closing a weft yarn carrying gripper, in a central position of the loom shed where weft yarn exchange takes place. In fig. 8, the free end of the control lever L comprises a widened crosspiece T, apt to operate a device for opening and closing a weft yarn carrying gripper in correspondence of the dead point outside the loom shed. In fig. 9, the control lever L - shown in three different positions - is formed like a rod and is used to separate the weft yarns W liable to get caught into each other while being picked up by the weft yarn carrying gripper.

The uses described heretofore should anyhow be considered as mere examples of the different possible uses of the actuator with linear motor according to the present invention. Said actuator may in fact be used to operate all the devices in a weaving machine which are characterized by intermittent and reciprocating movements, of limited amplitude, low power and high frequency. Another particularly interesting use of the actuator according to the present invention is, for example, to directly control the movement of one, or of both, of the cutting members of a weft yarn cutting device.

From the above description it clearly appears how the actuator with linear motor according to the present invention has fully reached the intended objects. It has in fact already been mentioned how, with said actuator, it has been possible to eliminate any sliding contact of the slider 3, thereby positively solving the problem of tightness to dust for the motor itself. It will then also be appreciated how the structure of said motor is very simple and thus apt to be miniaturized at will without any particular cost increase. The simplicity of said structure allows to most easily use said actuator to operate any of the devices mounted in a weaving machine, provided that it complies with the requisites already indicated in the introductory part, as it appears quite evident from the description of the different embodiments illustrated on the drawings.

It is anyhow understood that the scope of the present invention is not limited to the embodiments described heretofore, but includes any other variants, within reach of a technician skilled in the art, falling within the definition of the invention given in the following claims.

## Claims

1. Actuator with a flat littear motor comprising a stator and a slider movable therein, **characterized in that** said slider (3) forms the connecting rod of a flat four-bar linkage with two rocking levers (5, 6), each of said rocking levers being hinged on one side (in 8) onto said stator and on the other side (in 7) onto said connecting rod-slider (3).

2. Actuator as in claim 1), wherein said linear motor is of the impulse, direct current, or induction type.

3. Actuator as in claim 1), wherein said linear motor is of the direct current type and comprises a stator formed by two facing plates (1), each incorporating at least one electric coil (2), and a slider (3) consisting of a flat plate, interposed with a magnetic gap between the plates (1) of the stator and incorporating at least two permanent magnets (4) having opposed polarities.

4. Actuator as in claim 3), comprising means to adjust the intensity and direction of the current circulating in said coil (2), so as to regulate the force applied by the slider (3) and the direction of said force.

5. Actuator as in claim 4), comprising position sensor means to control the position of said slider (3).

6. Actuator as in claim 5), wherein said sensor means consist of a Hall effect sensor, interposed between a plate (1) of the stator and a tab (10) fixed to the fulcrum of one (5) of said rocking levers (5, 6).

7. Actuator as in claim 5), wherein said sensor means consist of a rotary encoder fixed to the fulcrum of one of said rocking levers (5, 6).

8. Actuator as in claim 5), wherein said sensor means consist of a rotary encoder controlled by a flexible cable fixed to said slider (3).

9. Actuator as in any one of the previous claims, wherein at least one of said rocking levers (5, 6) also comprises, beyond its hingeíng point (7) onto said slider (3), an extension in the form of a lever (L) apt to control a weaving device.

10. Actuator as in claim 9), wherein a rod (A) is hinged at the end of said extension forming the lever (L), said rod being freely slidable into a sliding joint (13) fixed to the stator, and the free end of said rod (A) comprising a yarnguide eyelet for a weft yarn.

11. Weft yarn presenting device formed by one or more actuators as in claim 10), mutually associated in an arc-shaped arrangement.

12. Actuator as in claim 9), wherein both said rocking levers (5, 6) comprise perpendicular extensions (14) apt to form two toggle-joint levers onto the ends of which there are pivoted two respective connecting rods (16), apt to operate the heald carrying slides, of a device (M) for the Leno heald weave of warp yarns (O).

13. Actuator as in claim 9), wherein said extension forming the lever (L) is apt to directly operate the device (P) for opening and closing a weft yarn carrying gripper.

14. Actuator as in claim 9), wherein said extension forming the lever (L) acts as a weft yarn separation device.

15. Actuator as in claim 9), wherein said extension forming the lever (L) is apt to directly control the movement of one, or of both, of the cutting members of a weft yarn cutting device.

## Patentansprüche

1. Aktuator mit einem flachen Linearmotor, der einen Stator und einen darin beweglichen Schieber aufweist, **dadurch gekennzeichnet, daß** der genannte Schieber (3) die Verbindungsstange eines flachen Vierstangengelenks mit zwei Schwenkhebeln (5, 6) bildet, wobei jeder der genannten Schwenkhebel auf einer Seite (bei 8) auf dem genannten Stator und auf der anderen Seite (bei 7) auf dem genannten verbindenden stangenförmigen Schieber (3) angelenkt ist.

2. Aktuator nach Anspruch 1, **dadurch gekennzeichnet, daß** der genannte Linearmotor vom Impuls-, Gleichstrom- oder Induktionstyp ist.

3. Aktuator nach Anspruch 1, **dadurch gekennzeichnet, daß** der genannte Linearmotor vom Gleichstromtyp ist und einen Stator aufweist, der durch zwei einander gegenüberstehende Platten (1) gebildet ist, von denen jede zumindest eine elektrische Spule (2) aufnimmt, und einen Schieber (3), der aus einer ebenen Platte besteht, der mit einem zwischenliegenden magnetischen Spalt zwischen den Platten (1) des Stators angeordnet ist und zumindest zwei Permanentmagneten (4) enthält, die entgegengesetzte Polaritäten aufweisen.

4. Aktuator nach Anspruch 3, **dadurch gekennzeichnet, daß** er ein Mittel enthält, um die Intensität und Richtung des Stroms, der in der genannten Spule (2) fließt, einzustellen, um auf diese Weise die Kraft, die durch den Schieber (3) ausgeübt wird, und die Richtung der genannten Kraft einzustellen.

5. Aktuator nach Anspruch 4, **dadurch gekennzeichnet, daß** er ein Mittel zum Erfassen der Position aufweist, um die Position des genannten Schiebers (3) zu kontrollieren.

6. Aktuator nach Anspruch 5, **dadurch gekennzeichnet, daß** das genannte Erfassungsmittel aus einem Halleffektsensor entsteht, der zwischen einer Platte (1) des Stators und einem Vorsprung (10), der an dem Schwenkpunkt von einem (5) der genannten Schwenkhebel (5, 6) befestigt ist, angeordnet ist.

7. Aktuator nach Anspruch 5, **dadurch gekennzeichnet, daß** das genannte Erfassungsmittel aus einem Drehkodierer besteht, der an dem Schwenkpunkt von einem der genannten Schwenkhebel (5, 6) befestigt ist.

8. Aktuator nach Anspruch 5, **dadurch gekennzeichnet, daß** das genannte Erfassungsmittel aus einem Drehkodierer besteht, der durch ein flexibles Kabel, das an dem genannten Schieber (3) befestigt ist, gesteuert wird.

9. Aktuator nach einem der vorangehenden Ansprüche, **dadurch gekennzeichnet, daß** zumindest einer der genannten Schwenkhebel (5, 6) ferner eine Verlängerung in Form eines Hebels (L) aufweist, über den Anlenkpunkt (7) an dem genannten Schieber (3) hinaus und der dazu bestimmt ist, eine Webvorrichtung zu steuern.

10. Aktuator nach Anspruch 9, **dadurch gekennzeichnet, daß** eine Stange (A) an dem Ende der genannten Verlängerung, die den Hebel (L) bildet, angelenkt ist, wobei die genannte Stange in einem Schiebegelenkstück (13) frei verschieblich ist, das an dem Stator befestigt ist, wobei das freie Ende der genannten Stange (A) eine Öse als Garnfrührung für einen Schußfaden aufweist.

11. Aktuator nach Anspruch 10, **dadurch gekennzeichnet, daß** er in einer bogenförmigen Anordnung einer Anzahl von ähnlichen Aktuatoren zugeordnet ist, so daß eine Vorrichtung zur Vorlage eines Schußfadens gebildet ist.

12. Aktuator nach Anspruch 9, **dadurch gekennzeichnet, daß** die beiden genannten Schwenkhebel (5, 6) senkrechte Verlängerungen (14) aufweisen, die dazu bestimmt sind, zwei Kniegelenkhebel zu bilden, wobei auf deren Enden zwei entsprechende Verbindungsstangen (16) schwenkbar angelenkt sind, die dazu bestimmt sind, die Litzentragschieber von einer Vorrichtung (M) für die Dreherlitzenbindung von Schußfäden (O) zu betätigen.

13. Aktuator nach Anspruch 9, **dadurch gekennzeichnet, daß** die genannte Verlängerung, die den Hebel (L) bildet, dazu bestimmt ist, unmittelbar die Vorrichtung (T) zum Öffnen und Schließen eines den Schußfaden tragenden Greifers zu betätigen.

14. Aktuator nach Anspruch 9, **dadurch gekennzeichnet, daß** die genannte Verlängerung, die den Hebel (L) bildet, als eine Vorrichtung zum Trennen von Schußfäden dient.

15. Aktuator nach Anspruch 9, **dadurch gekennzeichnet, daß** die genannte Verlängerung, die den Hebel (L) bildet, dazu bestimmt ist, unmittelbar die Bewegung von einem oder beiden der Schneidteile einer Vorrichtung zum Schneiden von Schußfäden zu steuern.

## Revendications

1. Actionneur comportant un moteur linéaire plat comprenant un stator et un coulisseau mobile dans celui-ci, **caractérisé en ce que** ledit coulisseau (3) constitue la tige de liaison d'une liaison à quatre barres plates comportant deux leviers de basculement (5, 6), chacun desdits leviers de basculement étant articulés d'un côté (en 8) sur ledit stator et de l'autre côté (en 7) sur ledit coulisseau de tige de liaison (3).

2. Actionneur selon la revendication 1, dans lequel ledit moteur linéaire est du type à impulsion, à courant continu ou à induction.

3. Actionneur selon la revendication 1, dans lequel ledit moteur linéaire est du type à courant continu et comprend un stator formé par deux plaques se faisant face (1), chacune incorporant au moins une bobine électrique (2), et un coulisseau (3) consistant en une plaque plate, interpolé avec un entrefer entre les plaques (1) du stator et incorporant au moins deux aimants permanents (4) ayant des polarités opposées.

4. Actionneur selon la revendication 3, comprenant un moyen d'ajuster l'intensité et la direction du courant circulant dans ladite bobine (2) de manière à réguler la force appliquée par le coulisseau (3) et la direction de ladite force.

5. Actionneur selon la revendication 4, comprenant un moyen de détecteur de position pour commander la position dudit coulisseau (3).

6. Actionneur selon la revendication 5, dans lequel ledit moyen de détecteur consiste en un détecteur à effet Hall interposé entre une plaque (1) du stator et une patte (10) fixée au pivot de l'un (5) desdits leviers de basculement (5, 6).

7. Actionneur selon la revendication 5, dans lequel ledit moyen de détecteur consiste en un codeur rotatif fixé au pivot de l'un desdits leviers de basculement (5, 6).

8. Actionneur selon la revendication 5, dans lequel ledit moyen de détecteur consiste en un codeur rotatif commandé par un câble flexible fixé audit coulisseau (3).

9. Actionneur selon l'une quelconque des revendications précédentes, dans lequel au moins l'un desdits leviers de basculement (5, 6) comprend également, au-delà de son point d'articulation (7) sur ledit coulisseau (3), une extension sous la forme d'un levier (L) apte à commander un dispositif de tissage.

10. Actionneur selon la revendication 9, dans lequel une tige (A) est articulée à l'extrémité de ladite extension formant le levier (L), ladite tige pouvant coulisser librement dans une articulation coulissante (13) fixée au stator, et l'extrémité libre de ladite tige (A) comprenant un oeillet de guide de fil pour un fil de trame.

11. Dispositif de présentation de fil de trame formé d'un ou de plusieurs actionneurs selon la revendication 10, associés mutuellement selon un agencement en forme d'arc.

12. Actionneur selon la revendication 9, dans lequel les deux leviers de basculement (5, 6) comprennent des extensions perpendiculaires (14) aptes à former deux leviers à articulations de genouillères, sur l'extrémité desquelles on fait pivoter deux tiges de liaison respectives (16), aptes à actionner les coulisseaux portant les lices d'un dispositif (M) destinées au tissage de maille de gaze de fils de chaîne (0).

13. Actionneur selon la revendication 9, dans lequel ladite extension formant le levier (L) est apte à mettre en oeuvre directement le dispositif (P) afin d'ouvrir et de fermer une pince portant un fil de trame.

14. Actionneur selon la revendication 9, dans lequel ladite extension formant le levier (L) agit en tant que dispositif de séparation de fil de trame.

15. Actionneur selon la revendication 9, dans lequel ladite extension formant le levier (L) est apte à commander directement le mouvement d'un élément de coupe, ou des deux éléments de coupe, d'un dispositif de coupe de fil de trame.
